# EUROPEAN PATENT APPLICATION

(11) **EP 4 252 967 A1**
(43) Date of publication of application: **04.10.2023**
(21) Application number: 22164612.8
(22) Date of filing: 28.03.2022
(51) Int. Cl.: B25F 5/00, H04W 52/02

(54) **MICROCONTROLLER BOARD FOR A POWER TOOL, MONITORING SYSTEM AND METHOD**

(71) Applicant: Hilti Aktiengesellschaft, 9494 Schaan (LI)
(72) Inventor: Crabolu, Michele, 9470 Buchs (CH); Bellusci, Giovanni, 9470 Buchs (CH); Altheimer, Julia, 88131 Lindau (DE); Salim, Adhil Mubarak, 86899 Landsberg am Lech (DE)
(74) Representative: Hilti Aktiengesellschaft Corporate Intellectual Property

(57) **Abstract**

The invention concerns a microcontroller board (10) attachable to a power tool (102), configured to detect a usage parameter of a power tool (102) to which the microcontroller board (10) is attached, wherein the usage parameter represents one out of at least a first, a second and a third usage mode of the power tool, comprising a sensor (24), a microprocessor (20) and an output device, wherein the microcontroller board (10) is configured to consume not more than a first energy for detecting the first usage mode while the power tool (102) is in use according to the first usage mode, and to consume at least a second energy for detecting at least one of the usage modes other than the first usage mode when the power tool (102) is being used according to the at least one of the usage modes other than the first usage mode, wherein the second energy is substantially, for example at least a factor of 2, preferably a factor of 5, in particular a factor of 10, higher than the first energy. The microcontroller board (10) may be used for monitoring the power tool (102) is very versatile and has a very long lifetime. Furthermore, the invention concerns a monitoring system and a method of monitoring.

## Description

The present invention relates to a microcontroller board attachable to a power tool, configured to detect a usage parameter of a power tool to which the microcontroller board is attached, wherein the usage parameter represents one out of at least a first, a second and a third usage mode of the power tool.

Power tools are used in the construction industry in almost all working tasks. Assessing power tools usage may help improve sustainability of the construction industry. For example, information on the usage of a power tool could be used to optimize workflows, maintenance interventions, productivity, and / or safety. A missed maintenance or an unexpected misusage may interrupt a workflow, or, in the worst case, affect safety of users.

These and other problems may be encountered by continuously monitoring the usage of the power tools, while disruptions of the established, traditional workflows due to the monitoring should be avoided.

In general, the more useful data may be collected and analyzed, the more sustainability may be improved.

Considering technical limitations, lifetime of battery-operated devices poses on of the biggest challenge. In particular, such operating lifetime limitations are preventing a widespread adoption of miniaturized, battery-powered sensor nodes for monitoring power tools in the form of microcontroller boards.

In order to balance the amount of collected data and the resources needed for, e. g. centralized analyzes of the collected data, the sensor nodes or microcontroller boards should preferably provide at least some data analyzing intelligence on-board.

In addition, to further limit the impact on the workflow, any microcontroller board to be attached on a power tool should be position-agnostic in order to allow a user to position it wherever he or she feels is most convenient.

Therefore, it is an object of the invention to provide a versatile microcontroller board for monitoring a power tool while requiring a minimum amount of maintenance.

This is achieved in a number of aspects of the present invention, in which a first aspect is a **microcontroller board** attachable to a power tool, configured to detect a usage parameter of a power tool to which the microcontroller board is attached, wherein the usage parameter represents one out of at least a first, a second and a third usage mode of the power tool, comprising a sensor, a microprocessor and an output device. The output device may be and / or comprise, for example, at least one of a memory, an interface, in particular a wireless interface, or a display. The microcontroller board is configured to consume not more than a first energy for detecting the first usage mode, and at least a second energy for detecting at least one of the usage modes other than the first usage mode, wherein the second energy is substantially higher than the first energy.

In this context, "substantially" may be understood as at least a factor of 2, preferably a factor of 5, in particular a factor of 10.

The inventors have realized that some usage modes may be easier to detect than others. Hence, it is possible that the microcontroller board is configured to detect the easier usage modes in a way and / or using electronic circuitry that consumes a low amount of energy for detection, whereas the remaining, more difficult usage modes are detected in other ways and / or using electronic circuitry that consumes a higher amount of energy for detection. So, energy consumption may be reduced and lifetime may be increased, even if only very limited energy capacities are available, as is, for example, in the case of battery-powered microcontroller boards. Due to long lifetimes, the microcontroller board may require very few or even no maintenances. Moreover, this favors a use on construction sites. Nonetheless, it is possible to detect both easy and difficult usage modes, rendering the microcontroller board very versatile.

The microcontroller board may comprise at least one printed circuit board (PCB). It may comprise a single-chip microcontroller comprising the microprocessor. The microprocessor may then be mounted to one side of the PCB and an energy source, e. g. a battery, may be mounted to the other side of the PCB, so that available space may be used more efficiently and / or to in order to use batteries having rather large capacities. Also, the microcontroller board may consist only of a single-chip microcontroller, in particular, if the single-chip microcontroller does not require further electronics for its operation.

The first and / or the second energy may be measured as a peak power or energy and / or as an average power and / or energy. It may, for example, be an average beginning on the onset of the usage mode of the power tool and / or beginning when a detection procedure for detecting the usage mode is started until the end of the detection procedure, e. g. when the usage mode is identified by the microcontroller board.

A plurality of ways to achieve different power and / or energy consumption for detecting different usage modes are possible. Some examples may be, each realized alone or in any combination: The microcontroller board may be configured to use different methods for detecting different usage modes. It may stop a detection procedure earlier when detecting the first usage mode than when detecting at least one of the other usage modes. It may use a multi-stage detection procedure and / or a multi-stage classifier. Multi-stage may refer to at least two stages. A clock rate determining a computation speed may be set depending on the usage mode to be detected. The microcontroller board may comprise a plurality of subsystems dedicated to detecting different usage modes and having substantially different power and / or energy consumption. Then, different subsystems may be running at different duty cycles. In particular, a first subsystem may be configured to detect whether the power tool is in use according to the first usage mode or according to one of the other usage modes. When the first subsystem detects the latter case, at least one other subsystem may be powered on and start identifying the detailed type of usage mode within the group of other usage modes. Thereafter, the at least one other subsystem may return to a lower-power state to save energy.

The subsystems may be implemented as a whole in the microcontroller board, in particular as part of the microprocessor. They may be implemented by hardware and / or software. For example, the subsystems may be implemented as separate electronic devices.

The power tool may be a hand-held power tool. It may be a mobile construction robot. It may be configured, for example, for drilling, in particular rock-drilling, sawing, grinding, vacuum cleaning, in particular of construction sites, measuring and / or marking. In case that the sensor is an accelerometer sensor and / or otherwise apt to sense vibration, the power tool may preferably be a vibration-generating power tool, for example, in case of vibration / acceleration sensor a drilling machine, a saw, a grinding machine and / or the like.

The power tool may be configured to be used on a construction site, e. g. a structural engineering and / or civil engineering construction site.

In general, the microcontroller board may be or comprise a so-called "smart tag". It may be self-contained.

It may comprise a housing. The housing may be waterproof, dust-proof and / or chemicals-resistant, e. g. resistant against typical organic solvents often present at construction sites.

The housing may be fully closed. It may have no switches and / or other manually operable elements. For this, the microcontroller board may be configured to be controlled wirelessly. It may comprise, for example, a near-field communication (NFC) device. The NFC device may be configured to harvest energy from radio signals. It may further be configured to switch the microcontroller board on and / or off. Also, other settings of the microcontroller board may be adjustable wirelessly. For example, the microcontroller board may be resettable to an original state by wireless communication. The microcontroller board may comprise firmware. The firmware may be programmable and / or updatable by wireless communication. Then the microcontroller board may be adapted to, for example, a certain type of power tool to which it is attached. Nonetheless, the housing may seamlessly encapsulate a printed circuit board of the microcontroller board containing its electronics and thus protect it against hazardous environmental influences.

The usage parameter may correspond to a usage of the power tool.

As an example, in the case of a hammer drill: the first usage mode may correspond to a simple movement or transportation of the power tool. The second usage mode may correspond to drilling. A third usage mode may correspond to hammer drilling. Equivalently, in the cases of sawing or grinding, the second and / or third usage modes may correspond to similar usage modes of the respective types of power tools. As a further example, the usage parameter, in particular the second, third and, if applicable, other usage modes, may correspond to different materials being worked by the power tool, e. g. wood versus metal and / or stone.

At least some of the usage modes may also correspond to inappropriate usages of the power tool, e. g. dropping of the power tool, temperature, in particular over-heating and / or environmental influences, e. g. corresponding to certain ranges of heat or cold.

The sensor may be configured to gather sensor data related to the usage of the power tool.

The microprocessor may be connected to the sensor. It may receive and process the sensor data and output its results to the output device.

The sensor data may be preprocessed, e. g. by a digital signal processor (DSP). The DSP may, for example, transform the sensor data to frequency-domain data, e. g. using a fast-Fourier transform (FFT). The gathered sensor data or the preprocessed data may be or comprise floating-point data and / or integer data.

The DSP may be part of the microprocessor. Alternatively, it may be realized as a separate entity.

The microcontroller board may comprise a first classifier configured to detect the presence of the first mode. The first classifier may be part of the microprocessor. Alternatively, it may be realized as separate entity. The first classifier may differentiate between a non-usage of the power tool, the first usage mode and / or a usage of the power tool not corresponding to the first usage mode. In particular, the first classifier may be configured to differentiate at least between non-usage of the power tool, for example, if the power tool is switched off, the first usage mode, and/or a usage of the power tool different from the first usage mode. For example, the first classifier may be configured to distinguish if the power tool is static, in motion or in use according to its type, for example, in case of a drilling machine that it is drilling.

The first classifier may be connected to the sensor. Thus, it may receive sensor data from the sensor.

The first classifier may perform a classification operation using particularly low-power or low-computation tasks. The classification operation may be based, for example, on simple thresholding and/or heuristics in the time or the frequency domain of the sensor data and/or the preprocessed sensor data.

The sensor data used by the first classifier may be sampled and / or classified at a first, particularly low, sampling rate.

The first classifier may be configured to wake-up another subsystem and / or to accelerate, e. g. increase an internal clock rate, the microprocessor for subsequent data processing and / or analysis, in particular when detecting that the power tool is used according to the first usage mode and / or when detecting that the power tool is used according to a usage mode different from the first usage mode.

In at least some embodiments, the microcontroller board may comprise a second classifier, the second classifier being configured to detect at least one of the modes other than the first usage mode. The second classifier may be part of the microprocessor. Alternatively, it may be realized as separate entity.

The sensor, the DSP and / or the first classifier may be connected to second classifier. Thus, the second classifier may receive sensor data, preprocessed sensor data and / or a classification result of the first classifier as input data.

The second classifier may be configured for an in-depth analysis of the sensor data, in particular in order to differentiate between a plurality of usage modes, in particular of usage modes other than the first usage mode, e. g. between the second, a third, etc., usage mode.

Hence, it is possible that the microcontroller board uses the first classifier, requiring only low power and / or energy, to the extent possible and to switch to using the second classifier, requiring more power and / or energy, only if further data processing is necessary.

Examples of usage modes identified by the second classifier may, for example, be:
- Distinguishing if the power tool is operated or just in motion, e. g. transported. "Operated" in this context may mean that a motor of the power tool is powered and running;
- Distinguishing between an idle condition against an actual working condition. "Idle" in this context may mean a condition when the motor of the power tool is powered and running but no load is applied, for example, because the power tool is not in contact with a material to work;
- Distinguishing the way the power tool is transported, for example by distinguishing between a transport by a motor vehicle or by a person;
- Identifying and / or distinguishing of the material being worked, e. g. concrete vs wood and / or versus steel;
- Identifying and / or distinguishing a type of a tool attached to the power tool (e.g., wood drill bit vs steel drill bit and / or rock drill bit in case of a drilling machine;
- Identifying and / or distinguishing a consumable which is being used together with the power tool, e. g. in the case of a setting power tool, by distinguishing a bolt from a screw;
- Identifying and / or distinguishing a task the power tool is performing, e.g., drilling, chiseling, grinding, sawing, sanding, hammering, coring, etc.;
- Identifying and / or distinguishing a misuse of the power tool, e.g., drops from height, drilling in a rebar with an inadequate insert in case of a combi-hammer, cutting metal using a wood blade in case of a reciprocating saw, etc.;
- Identifying and / or distinguishing a working direction of the tool, e.g., overhead, downside or horizontal.
- Identifying and / or computing a measure of power tool runtime, preferably by using at least in part an identified second, third and / or other usage mode.

The usage parameter may be enriched with additional data before being output to the output device. For example, time stamp data may be added to the usage parameter.

Hence, the microcontroller board may comprise at least one clock and / or a timer.

In order to provide such analysis, the second classifier may comprise a machine learner. The machine learner may be configured to run at least one machine learning algorithm to analyze the input data. The machine learner may, for example, comprise at least one of a neural network (NN), a convolutional neural network (CNN), a recurrent neural network (RNN), a support vector machine (SVM), a decision tree (DT), or a deep learning unit (DL).

The sensor may comprise or be at least one of an accelerometer sensor, a temperature sensor or a humidity sensor. The accelerometer may comprise a MEMS-based sensor. It may be configured to sense accelerations in at least two, in particular in three, dimensions.

Additionally, or in the alternative, the sensor may be or comprise a current and / or a voltage sensor, a pressure sensor, a gyroscope, a position detection sensor, e. g. based on a global navigation satellite system (GNSS), a magnetometer, a vibration sensor, a light sensor, e. g. an infrared-light sensor, and / or an acoustic sensor, e. g. a microphone. In some embodiments, the sensor may thus comprise one or more different sensor elements.

The pressure sensor may be used in combination with the accelerometer data to classify the usage of the power tool or certain usage conditions.

The humidity and / or the temperature sensor may be used, in particular in combination with the other sensor data, to improve classification of power tool usage, for detecting atmospheric circumstances and / or storing conditions.

The gyroscope may be combined with the accelerometer data and/or other sensors to further improve the classification of the usage of the power tool. Moreover, a motion trajectory of the power tool may be tracked.

An absolute position may be determined using the GNSS sensor, for example in order to estimate the task the power tool is expected to perform.

The analysis performed by the second classifier may, at least in part, be based on a result of the first classifier. Additionally, or in the alternative, the second classifier may make use of additional sensor data, in particular not yet used for a classification by the first classifier.

The output device may comprise a wireless interface. The wireless interface is preferably configured for low-energy consumption, e. g. based on the Bluetooth Low Energy (BLE) protocol. Additionally, or alternatively, the wireless interface may be based on cellular communication, e. g. GSM, 2G, 4G, 5G, and / or the like, LoRa (Long Range), NFC (Near Field Communication), RFID (Radio-Frequency Identification), UWB (Ultra-Wide Band), etc. The output device may, for example, use a PCB customized antenna and / or any SMD antenna. The wireless interface may be configured for short-range, e. g. distances below 50m, or wide-range connectivity, e. g. world-wide connectivity, and, for example, using external devices as gateways, e. g. smartphone, portable computers, gateways, cloud server, or other construction site tools, e. g. construction vacuum cleaner, air purifier, combi-hammer, wearable devices, or the like.

Usually, wireless interfaces may have rather high power demands, during specific activities, e. g. while sending and / or receiving radio signals. Such activities may also require waking up at least a part of the remaining microcontroller board, e. g. the microprocessor. To avoid such wake-ups and thus to further reduce overall energy consumption, the microcontroller board may be configured such that the second classifier is predominantly, in particular solely, used during such an activity of the wireless interface. For example, if the wireless interface is to send periodic beacon signals, the at least a part, in particular the whole, microcontroller board may switch to an ultra-low power mode, e. g. a sleep mode, between pairs of consecutive beacon signals and only wake up while preparing and / or sending the beacon signals. When woken up, the first and / or the second classifier may perform its task or their tasks. Thus, powerconsuming wake-ups between two beacon signals may be avoided.

The microcontroller board may also comprise at least one timer. The timer may be used to trigger the wireless interface to transmit the beacon signal and / or to trigger the first and / or the second classifier.

The extremely low power consumption achievable permits that the microcontroller board may comprise a battery and / or that it runs battery-powered. Then, the use of the microcontroller board does not depend on certain environmental conditions like sunlight, wind, vibrations, and / or the like. The battery may be or comprise at least one coin battery, a cylindrical battery and / or a pouch cell.

The battery may be rechargeable. For example, recharging may be performed inductively, via electro-magnetic energy transfer and / or via direct electronic contact, e. g. on an outer surface of the housing. So, when a maintenance of the power tool is provided, the battery of the microcontroller board can be recharged, thus increasing duration of life of the microcontroller board, and thus further increasing sustainability of the microcontroller board itself. Recharging intervals may be very long and thus require only minimal additional maintenance due to the extremely low overall power consumption of the microcontroller board.

Additionally, or alternatively, the microcontroller board may comprise an energy harvesting module for, for example, vibration energy harvesting, thermal energy harvesting, and / or photovoltaic energy harvesting. The energy harvesting may be used to recharge the battery and / or to directly power and / or control at least a part of the microcontroller board, e. g. in order to switch the microcontroller board on.

In some embodiments, the microcontroller board may be detachably attachable to the power tool, thus further increasing its versatility. In particular, the microcontroller board may comprise a clamp for clamping the microcontroller board on a housing of the power tool. Additionally, or alternatively, it may comprise a removable and / or reusable glue or gluing strip, a cord, cable, a wire, a suction cup, and / or a socket adapter to be inserted into a socket typically available on a power tool, e. g. adapted to a battery socket of a battery-powered power tool.

In a further aspect the invention relates to a **monitoring system** comprising a power tool and a microcontroller board as previously described. The microcontroller board is attached to a housing of the power tool, thus capable of monitoring at least one usage parameter of the power tool.

In yet another aspect the invention relates to a method of monitoring a power tool, wherein, when the power tool is used according to a first of at least three usage modes, the first usage mode is detected using a first classification method, and wherein, when the power tool is used according to one of the usage modes other than the first usage mode, the one of the usage modes other than the first usage mode is detected using a second classification method, wherein the first classification method requires substantially less energy resources than the second classification method.

Furthermore, the microcontroller board may comprise a memory storage and/or it may be configured to store at least one detected usage mode in the memory storage for later retrieval, in particular of a history of the usage parameter monitored.

The microcontroller board, in particular the microprocessor, may be run in different power modes. The power modes may depend on the usage mode to be detected and / or on the classifier - first and / or second classifier - in use. The power modes may include different modes, e. g. a sleep mode, a low power, and / or a high-power mode. Different parts and / or subsystems of the microcontroller board may be run at different power modes and / or may selectively be switched on or off.

The above power modes may be, at least in part, controlled based on the outcome of the first classifier. For example, a sampling frequency used by the accelerometer sensor to gather data may be set by default to a minimum rate, and it may be increased based on the outcome of the first classifier to gather data sampled at higher rates for the second classifier.

The microcontroller board may be configured to generate a reporting and / or alert signal based on one or more detected power tool usages. The signal may signal, for example, a maintenance requirement, and end of life, or a change of usage, e. g. to switch from a hammering to a non-hammering drilling or vice-versa.

The microcontroller board, in particular the output device, may further comprise at least one visual user interface component like a LEDs and / or an acoustic user interface, e. g. a buzzer. Such a user interface may be employed for, for example, signaling a critical condition caused by the power tool und thus protecting and fostering health and safety of a user of the power tool.

The usage parameter detected may be output as output data to the output device, e. g. the wireless interface. The output data may then reach a gateway that in turn may send the received information to a cloud server. The gateway may expand the output data with additional information like geolocation, timestamp data, e. g. precise Coordinate Universal Time (UTC), temperature, humidity, etc. The cloud server may then process the received data and generate jobsite analytics like
- health status estimation of the power tool, e. g. based on the time the tool spends in each activity, wherein a model may predict a remaining time for a next maintenance;
- a power tool park and inventory optimization;
- work progress monitoring and / or work-flow optimization;
- unsafe usages and / or misuses of the power tool; and / or
- power tool usages based on the calculated tool usage condition over time, preferably including alerts for requirements of maintenance, estimations of remaining power tool life, optimization possibilities, etc.

The machine learner may use a static, pre-trained network. Alternatively, it may be further, in particular incrementally, trained using gathered sensor data.

In a further example, the first classifier or the second classifier may run calibration routines in order to specifically detect, for example, where and / or how the microcontroller board is attached to the power tool.

The result of such classification may then be used as input to the future usage parameter detection. This may improve classification performance. Moreover, it may allow the user to attach the microcontroller board on substantially any position on the power tool and thus making the microcontroller board attachment-position-agnostic, and thus not impacting a workflow of the user using the power tool.

At least in some embodiments, the second classifier, in particular the machine learner, may thus be activated only when strictly necessary and thus saving overall energy consumption. The circumstances of "strictly necessary" use of the second classifier, may be defined at least in part by the outcome of the first classifier and/or a timer-based triggering mechanism.

The timer may be a cyclical trigger. It may be the same or an independent timer. It may be used to control the beaconing intervals of the wireless interface. The beacon signal may comprise broadcasting an identifier code of the microcontroller board, in particular of the wireless interface.

In a further aspect the invention relates to a **microcontroller board attachable to a power tool,** the microcontroller board comprising a sensor, a first classifier and a second classifier. The sensor, the first classifier and / or the second classifier may have one or more of the features described previously described, in the drawings and / or in the subsequent description of drawing. For example, the second classifier may comprise a machine learner. As a further example, the sensor may be or comprise an accelerometer sensor. The various features may be realized individually or in combination in any desired way.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

### In the drawings:

- Fig. 1: shows a perspective top view on a microcontroller board;
- Fig. 2: shows a perspective bottom view on the microcontroller board;
- Fig. 3: shows a perspective view on an upper side of a PCB of the microcontroller board;
- Fig. 4: shows a perspective view on a bottom side of a PCB of the microcontroller board;
- Fig. 5: shows a block diagram of the microcontroller board;
- Fig. 6: shows a spectrum diagrams of accelerometer sensor data;
- Fig. 7: shows a schematic timing diagram; and
- Fig. 8: shows a cloud-based monitoring system.

Same reference signs are used for functionally equivalent elements in all figures.

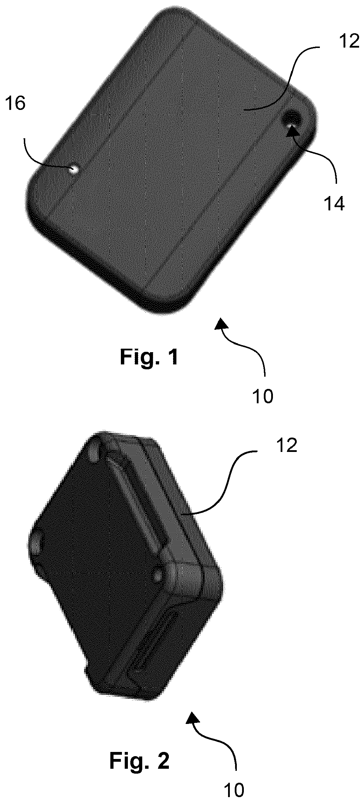

**Fig. 1** and **fig. 2** show a perspective views on a microcontroller board 10 and its housing 12.

The microcontroller board 10 is water-, dust- and organic solvent-proof. For this, the housing 12 is sealed such that it tightly encapsulates a PCB comprising electronics of the microcontroller board 10.

The microcontroller board 10 is configured to monitor a usage parameter of a handheld drilling power tool to which it is attached to.

In particular, five types of usages are to be distinguished:
- "power-off' of the power tool,
- "transport",
- "idle", i. e. drilling without load, in particular without contact to a material to be drilled,
- "metal", i. e. drilling in metal, and
- "wood", i. e. drilling in wood.

The housing has a fixation hole **14,** that may be used for attaching the microcontroller board 10 to a power tool, e. g. using a wire.

Furthermore, the microcontroller board 10 has an LED 16.

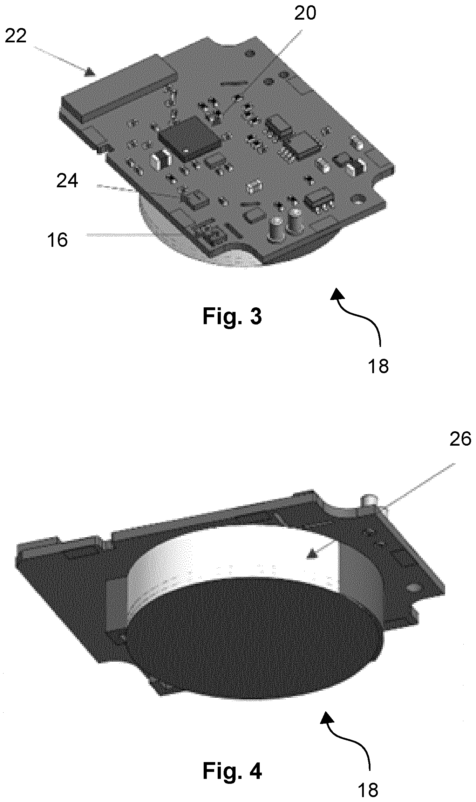

**Fig. 3** and **fig. 4** show perspective views on an upper or, respectively, a bottom side of a PCB **18** of the microcontroller board. The PCB 18 comprises the electronics necessary for performing the tasks of the microcontroller board 10.

In particular, the PCB 18 comprises a microprocessor **20,** a wireless interface **22,** an accelerometer sensor **24,** the LED 16, and a battery **26.**

The microprocessor 20 may be a system-on-chip (SOC), providing not only functions of a central processing unit, but also providing supporting elements such as timers, volatile and / or nonvolatile memory. The microprocessor 20 may be configured for very low power consumption. It may be based, for example, on a 32- or 64-bit-SoC.

The wireless interface 22 may also be configured for low power consumption. For this, it may be configured to support a Bluetooth Low Energy (BLE) protocol.

Moreover, the accelerometer sensor 24 may be configured to measure at different sampling rates, thus providing a plurality of sensing options having different power consumption.

The battery 26 is a standard Lithium-based coin cell. It may have a capacity of, for example, 250 mAh.

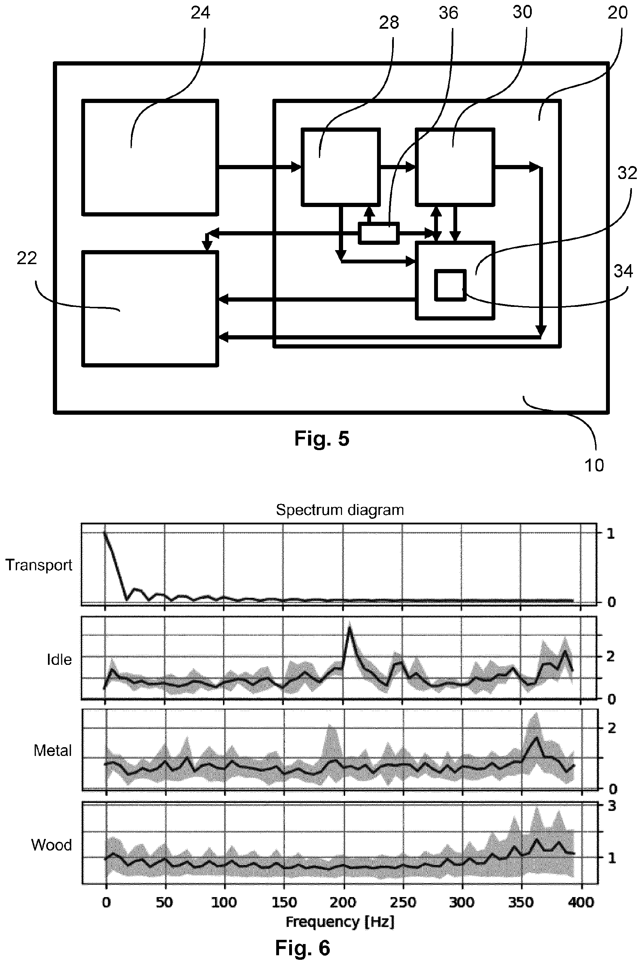

**Fig. 5** shows a block diagram of the microcontroller board 10. The accelerometer sensor 24 is connected to the microprocessor 20, in particular to a DSP **28** contained inside the microprocessor 20.

The DSP 28 performs a pre-processing in the form of digital Fast Fourier-transforms on sensor data received from the accelerometer sensor 24. Frequency-domain data is then transmitted from the DSP 28 to a first classifier **30.** The first classifier 30 is also realized as part of the microcontroller board 20. The first classifier 30 classifies the spectrum data based on predefined thresholds. In particular, it classifies the pre-processed acceleration data into either "power-off", if the total sum of amplitudes is below a first threshold, into "transport" if the received spectrum peaks below a threshold frequency (see also fig. 6), or else into "other".

As the distinguishing tasks comprise only very few comparison operations, the power consumption of the first classifier is very low and may even be below measurable amounts of energy.

In own experiments, the microcontroller board 10, in particular the DSP 28 and the first classifier 30, consumed approximately 0.02 mJ for distinguishing between "power off", transport" or "other", so that a first maximum energy consumed by microcontroller board 10 for classifying "power off', "transport" or "other" is at most 0.02 mJ. Of course, most of this energy may have been consumed by the DSP 28 alone.

If a usage mode other than "other" is identified, the first classifier 30 transmits this usage mode to the wireless interface 22, so that it may send the result to, for example, a gateway or a cloud server for further processing.

The microprocessor 20 further comprises a second classifier **32.** The second classifier comprises a machine learner **34.** The machine learner 34 may, for example, comprise a network architecture based on two convolutional stages and an aggregation stage. It may be trained by a plurality of spectrum data obtained from a plurality of training usages of the drilling power tool.

According to our tests, a classification operation on pre-processed sensor data by the machine learner 34 consumed a second energy of approximately 9 mJ. Latency of the machine learner 34 was approximately 0.3 s.

Therefore, the second energy is - as to be expected from the design of the microcontroller board 10 - substantially higher than the first energy, in particular according to a factor of more than 400.

According to our experiments, the microcontroller board 10 may have a lifetime of at least four years at usual usage and a shelf lifetime of at least 15, e. g. 17, years.

**Fig. 6** shows spectrum diagrams of training data used. It can be seen from the diagrams, that the usage mode "transport" is characterized by a specific peak at low frequencies, e. g. below 50 Hz. Thus "power-off', which is expected to provide no or only minimal vibrations, and "transport" may be distinguished by simple, threshold-based comparisons as performed by the first classifier 30.

The other usage modes have more complex frequency spectrums, which thus require more resource-intensive computations for identification. These computations are performed by the machine learner 34, or, generally speaking, by the second classifier 32. According to the training of the machine learner 34, it is trained to distinguish between the usage modes "idle", "metal", and "wood".

Turning back to the block diagram of fig. 5: the microprocessor 20 further comprises at least one timer **36.** The timer 36 generates periodic trigger pulses. The trigger pulses trigger the wireless interface 22 to generate and broadcast beacon signals.

While the microcontroller board 10 may remain in a low-power mode during activities of the DCP and / or the first classifier, it may temporarily enter a higher-power mode for other activities, in particular for classification tasks of the second classifier 32.

Pre-processing by the DSP and / or classification tasks of at least one of the first or the second classifier, preferably at least of the second classifier, may also be synchronized to the trigger pulses of the timer 36 and thus to the beacon signals of the wireless interface 22.

Furthermore, the microcontroller board 10, in particular the microprocessor 20, may be configured such that the second classifier 32 is only activated and / or the microcontroller board 10 enters only the higher-power mode, if the first classifier 30 identified an "other" usage mode.

After activation the second classifier, in particular the machine learner 34, performs an in-depth analysis of the sensor data pre-processed by the DSP 28, resulting in one identified usage mode of the group of "idle", "metal" or "wood".

In one embodiment, the classification task of the second classifier may be based on more fine-grained sensor data, e. g. sensor data sampled and pre-processed at a higher sampling rate and / or comprising more data points than the sensor data used by the first classifier. For this, a sample rate of the sensor 24, a processing rate and / or a sample block length may be temporarily increased, in particular solely if the second classifier is to determine a usage mode.

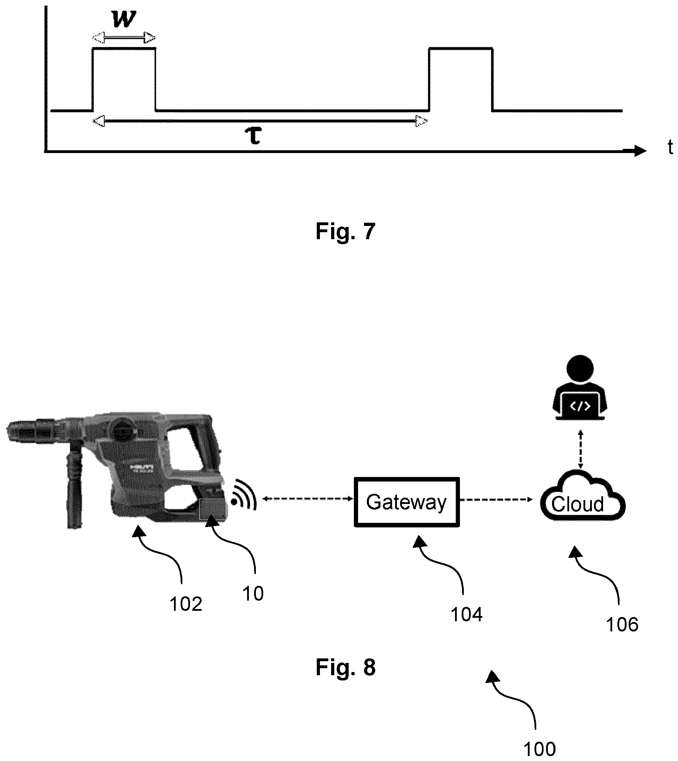

Fig. 7 shows a timing diagram of the trigger pulses.

A further option to reduce power consumption may be achieved if a first, relatively short, set of sensor data during a first time interval **ω** is acquired in synchronization to the trigger pulse, then pre-processed and classified by the first classifier. Then, in case the first classifier does not identify an "other" usage mode, the microcontroller board 10 enters or, respectively, returns in a low-power, in particular a sleep, power mode until the next trigger pulse. In case an "other" usage mode is identified, a longer set of sensor data, in particular during a second time interval **τ**, may be acquired, pre-processed and classified by the second classifier 32.

**Fig. 8** shows a cloud-based monitoring system **100.** It comprises a power tool **102,** for example a hammer drilling power tool, to be monitored. The microcontroller board 10 is attached to a housing of the power tool 102. It may, for example, be glued to the housing.

The microcontroller board 10 monitors the power tool 102 to which it is attached. It sends identified usage modes, or identified values of the usage parameter, to a wireless gateway **104.** The gateway 104 then further forwards the usage parameter to a cloud server **106** for further analysis. After further analysis, the cloud server may then inform and / or communicate with a user of the cloud server 106.

## Claims

1. **Microcontroller board (10)** attachable to a power tool (102), configured to detect a usage parameter of a power tool (102) to which the microcontroller board (10) is attached, wherein the usage parameter represents one out of at least a first, a second and a third usage mode of the power tool, comprising
- a sensor (24),
- a microprocessor (20) and
- an output device,
wherein the microcontroller board (10) is configured to consume not more than a first energy for detecting the first usage mode while the power tool (102) is in use according to the first usage mode, and to consume at least a second energy for detecting at least one of the usage modes other than the first usage mode when the power tool (102) is being used according to the at least one of the usage modes other than the first usage mode,
wherein the second energy is substantially, for example at least a factor of 2, preferably a factor of 5, in particular a factor of 10, higher than the first energy.

2. Microcontroller board, according to the previous claim, **characterized in that** it comprises a first classifier (30) configured to detect if the power tool (102) is in use according to the first usage mode.

3. Microcontroller board according to one of the previous claims, **characterized in that** it comprises a second classifier (32), the second classifier (32) being configured to detect if the power tool (102) is being used according to at least one of the usage modes other than the first usage mode.

4. Microcontroller board according to one of the previous claims, **characterized in that** the second classifier (32) comprises a machine learner (34).

5. Microcontroller board according to one of the previous claims, **characterized in that** the sensor (24) comprises or is at least one of an accelerometer sensor, a temperature sensor or a humidity sensor.

6. Microcontroller board according to one of the previous claims, **characterized in that** the output device comprises a wireless interface (22).

7. Microcontroller board according to one of the previous claims, **characterized in that** it is configured such that the second classifier (32) is predominantly, in particular solely, used during a high-power activity of the wireless interface (22).

8. Microcontroller board according to one of the previous claims, **characterized in that** it comprises a battery (26).

9. Microcontroller board according to one of the previous claims, **characterized in that** it is detachably attachable to the power tool (102).

10. **Monitoring system** comprising a power tool (102) and a microcontroller board (10) according to one of the previous claims, wherein the microcontroller board (10) is attached to a housing of the power tool (102).

11. **Method of monitoring** a power tool (102), wherein, when the power tool (102) is being used according to a first of at least three usage modes, the first usage mode is detected using a first classification method, and wherein, when the power tool (102) is being used according to one of the usage modes other than the first usage mode, the one of the usage modes other than the first usage mode is detected using a second classification method, wherein the first classification method requires substantially less energy resources than the second classification method.
